# EUROPEAN PATENT SPECIFICATION

(11) **EP 2 930 032 B1**
(45) Date of publication and mention of the grant of the patent: **01.06.2016**
(21) Application number: 15161175.3
(22) Date of filing: 26.03.2015
(51) Int. Cl.: B60B 27/00, B60B 27/02

(54) **SADDLE RIDING TYPE VEHICLE**
SATTELFAHRZEUG
VÉHICULE À MONTURE

(30) Priority: 10.04.2014 JP 2014081163
(43) Date of publication of application: 14.10.2015
(73) Proprietor: Yamaha Hatsudoki Kabushiki Kaisha, Iwata-shi, Shizuoka-ken 438 (JP)
(72) Inventor: Sagane, Kazunari, Shizuoka-ken, 438-8501 (JP)
(74) Representative: Moreland, David

(56) References cited:
- JP-A- 2007 178 254
- US-A1- 2006 202 553
- US-A1- 2007 211 974

## Description

### FIELD OF INVENTION

The present invention relates to vehicle, such as a saddle-ride vehicle or straddle-type vehicle, driven by a rider straddling the vehicle, and more particularly to a mounting structure which mounts a sensor rotor for detecting wheel speed on a wheel member.

### BACKGROUND TO INVENTION

A conventional saddle riding vehicle of this type includes a main frame, a wheel support, a sensor rotor and a wheel speed sensor (e.g. Japanese Utility Model Publication No. H7-17609 (Figures 5 and 6), Japanese Unexamined Patent Publication No. 2002-79974 (Figures 3 to 5) and Japanese Unexamined Patent Publication No. 2009-255826 (Figures 3, 7 and 8), for example).

The sensor rotor is mounted on the front wheel, for example. The front wheel is rotatably attached to a lower portion of the wheel support which is attached to a front portion of the main frame. The sensor rotor has an annular shape, and is mounted to have an inner circumferential surface thereof located on an outer circumferential surface of a hub with an axle inserted therein. The wheel speed sensor detects outer peripheries of the sensor rotor, and outputs a signal corresponding to a rotating speed of the front wheel.

Since a wheel member on which the front wheel is mounted is generally manufactured by casting, the outer circumferential surface of the hub is rough. Therefore, in order to attach the sensor rotor on the wheel member with increased accuracy of coaxiality between the sensor rotor and the axle, the wheel member is processed to increase the accuracy of coaxially at the outer circumferential surface of the hub.

However, the conventional example with such construction has the following problems.

The conventional apparatus, which requires the outer circumferential surface of the hub of the wheel member to be processed to improve its coaxiality, has a problem of high cost due to an additional cost of the process. Since the sensor rotor is mounted on the outer circumferential surface of the hub, the sensor rotor has a large diameter. This poses a problem of an increase in the weight of the sensor rotor. Further, because of the large diameter of the sensor rotor, a stay having an increased length is required for attaching the wheel speed sensor, which poses a problem of lowered strength.

US20070211974 describes a vehicle according to the preamble of claim 1 with an oil bath rotating hub and stationary spindle assembly that includes an oil bath seal that seals between the hub and the spindle. A wheel sensor assembly includes a variable reluctance sensor that targets an encoder ring that is integrated into the oil bath seal. The oil bath seal comprises a steel carrier that is fixed relative to the hub so that it rotates with the hub about the spindle. Specifically, the carrier is press fit within a correspondingly shaped female feature on the hub.

JP2007-178254 describes a hub that is rotatably fitted to a bearing on the outer end of a spindle. An annularly shaped mandrel of an oil seal is press fitted into the inner peripheral surface of the hub. The mandrel extends radially outwardly so as to be integrally formed with a rotation part of a speed sensor. It is an object of at least one embodiment of at least one aspect of the present invention to obviate or at least mitigate one or more problems or disadvantages in the prior art.

### SUMMARY OF INVENTION

Various aspects of the present invention are defined in the independent claims appended herewith. Some preferred features are defined in the dependent claims appended herewith.

This invention has been made having regard to the state of the art noted above, and an object of the invention is to provide a saddle riding type vehicle in which a mounting structure for a sensor rotor is devised to achieve reductions in cost and weight of a wheel having the sensor rotor, and improve strength.

Described herein by way of example only is a vehicle, such as a saddle riding or straddle type vehicle driven by a straddling rider, the vehicle comprising a wheel. The wheel may include a wheel member having an annular rim and a hub formed centrally of the rim. The hub may have a through hole or passage formed at, or extending along, a center of rotation e.g. of the wheel and/or wheel member. A bearing may be attached to an inner circumferential surface of the through hole or passage. A tire may be attached or attachable to the rim. The vehicle may comprise a wheel support for rotatably supporting the wheel with an axle inserted in the through hole or passage. The vehicle may comprise a sensor rotor or sensor rotor assembly, which may be mounted on the hub using the inner circumferential surface of the through hole or passage as reference. The vehicle may comprise a wheel speed sensor for detecting rotation of the sensor rotor or sensor rotor assembly.

The sensor rotor or sensor rotor assembly may be positioned on the hub with reference to the inner circumferential surface of the through hole or passage. The sensor rotor or sensor rotor assembly may be concentric or co-axial with the center of rotation of the wheel or wheel member and/or the inner circumferential surface of the through hole or passage. The sensor rotor assembly may comprise the sensor rotor.

Since it is necessary to ensure a high degree of rotation accuracy of the wheel using the bearing and axle, the through hole formed at the center of rotation of the hub may be processed to have a highly accurate coaxiality with respect to the center of rotation, e.g. of the wheel or wheel member. Therefore, by mounting the sensor rotor using the inner circumferential surface of this through hole as reference, the sensor rotor may be mounted with a high degree of coaxiality without processing the outer circumferential surface of the hub. This may curb processing cost to reduce the cost of the wheel. Since the reference for mounting the sensor rotor may be set close to the center of rotation, the sensor rotor may be reduced in diameter. This may attain a weight saving of the wheel. Since the diameter of the sensor rotor may be small, a stay to which the wheel speed sensor may be attached may be reduced in length and improved in strength.

The vehicle, e.g. the sensor rotor assembly, may further comprise a spacer. The sensor rotor assembly, e.g. the spacer, may include a projection, which may project toward the hub. The spacer may comprise a mount portion projecting in a direction away from the projection. The spacer and/or the sensor rotor assembly may be attached with at least part or all of an outer circumferential surface of the projection positionally adjusted, fitted or mounted to, e.g. contacting, the inner circumferential surface of the through hole. The sensor rotor may have an annular outward appearance, and may be mounted with at least part or all of an inner circumferential surface thereof positionally adjusted, fitted or mounted to an outer circumferential surface of the mount portion.

The projection of the spacer may be mounted in the through hole of the hub. The sensor rotor may be mounted on the mount portion of the spacer. The arrangement may realize a high degree of coaxiality with ease. These components may be mounted with high coaxiality even where they are not directly mounted because of a relationship between materials forming the wheel member and the sensor rotor.

The through hole may have a dust seal, which may be disposed between an inner circumferential surface of the spacer and an outer lateral surface of the bearing. The dust seal may prevent entry of dust to the bearing.

The spacer may be formed from a different material to the wheel member and sensor rotor. The wheel member may be formed of a magnesium alloy, the sensor rotor may be formed of iron, and/or the spacer may be formed of an aluminum alloy.

An interaction between the wheel member formed of a magnesium alloy and the sensor rotor formed of iron may tend to cause corrosion of the wheel member formed of a magnesium alloy. Such corrosion may be prevented by interposing the spacer in between.

The sensor rotor may have an annular outward appearance. The sensor rotor may comprise an engaging portion formed of an inner circumferential region thereof projecting toward the hub. The sensor rotor may be mounted with an outer circumferential surface of the engaging portion positionally adjusted, fitted or mounted to the inner circumferential surface of the through hole.

Since the sensor rotor may be mounted with the outer circumferential surface of its engaging portion positionally adjusted to the inner circumferential surface of the through hole, the sensor rotor may be mounted easily with a high degree of coaxiality, without necessitating an additional interposing component.

The through hole may have a dust seal, e.g. disposed between an inner circumferential surface of the engaging portion and an outer lateral surface of the bearing. The dust seal may prevent entry of dust to the bearing.

Described herein by way of example only is a method of mounting a sensor rotor or sensor rotor assembly to a hub for/of a wheel, such as a wheel for a saddle-ride or straddle-type vehicle. The hub may be comprised in or fittable to a wheel member of the wheel.

The wheel member may comprise an annular rim. The hub may be formed centrally of the rim. The hub may have a through hole or passage formed at or along a center of rotation e.g. of the wheel and/or wheel member. A bearing may be attached to an inner circumferential surface of the through hole or passage. A tire may be attached or attachable to the rim. The vehicle may comprise a wheel support for rotatably supporting the wheel with an axle inserted in the through hole or passage. The vehicle may comprise a wheel speed sensor for detecting rotation of the sensor rotor or sensor rotor assembly.

The method may comprise mounting a sensor rotor or sensor rotor assembly on the hub using the inner circumferential surface of the through hole or passage as reference.

The method may comprise positioning the sensor rotor or sensor rotor assembly on the hub with reference to or by referring to the inner circumferential surface of the through hole or passage. The method may comprise mounting the sensor rotor or sensor rotor assembly such that it is concentric or co-axial with the center of rotation of the wheel or wheel member and/or the inner circumferential surface of the through hole or passage.

The sensor rotor assembly may comprise a/the sensor rotor. The sensor rotor assembly may further comprise a spacer. The sensor rotor assembly, e.g. the spacer, may include a projection, which may project toward the hub. The spacer may comprise a mount portion, which may project in a direction away from the projection.

The method may comprise attaching or mounting the sensor rotor assembly with at least part or all of an outer circumferential surface of the projection positionally adjusted, fitted and/or mounted to, e.g. contacting, the inner circumferential surface of the through hole.

The sensor rotor may have an annular outward appearance. The method may comprise mounting the sensor rotor with an inner circumferential surface thereof positionally adjusted, fitted and/or mounted to an outer circumferential surface of the mount portion.

The sensor rotor may comprise an engaging portion formed of an inner circumferential region thereof projecting toward the hub. The method may comprise mounting the sensor rotor with an outer circumferential surface of the engaging portion positionally adjusted, fitted and/or mounted to the inner circumferential surface of the through hole.

The method may comprise disposing a dust seal, e.g. between an inner circumferential surface of the spacer or the engaging portion and an outer lateral surface of the bearing. The dust seal may prevent entry of dust to the bearing.

The method may be, or be comprised in, a method of producing or repairing a vehicle according to the first aspect or retrofitting the sensor rotor assembly thereto. The vehicle may be a vehicle according to the first aspect.

Described herein by way of example only is a sensor rotor assembly comprising a sensor rotor.

The sensor rotor assembly may be a sensor rotor assembly for a vehicle such as a saddle riding type vehicle driven by a straddling rider, which may be a vehicle according to a first aspect of the invention.

The vehicle may comprise a wheel. The wheel may include a wheel member having an annular rim, and a hub formed centrally of the rim. The hub may have a through hole or passage formed at a center of rotation e.g. of the wheel and/or wheel member. A bearing may be attached to an inner circumferential surface of the through hole or passage. A tire may be attached or attachable to the rim. The vehicle may comprise a wheel support for rotatably supporting the wheel with an axle inserted in the through hole or passage. The vehicle may comprise a wheel speed sensor for detecting rotation of the sensor rotor or sensor rotor assembly.

The sensor rotor assembly may be mounted or mountable on the hub using the inner circumferential surface of the through hole or passage as reference.

The sensor rotor assembly may be positioned or positionable on the hub with reference to the inner circumferential surface of the through hole or passage. The sensor rotor assembly may be positioned or positionable on the hub so as to be concentric or co-axial with the center of rotation of the wheel or wheel member and/or the inner circumferential surface of the through hole or passage.

The sensor rotor assembly may comprise a spacer. The sensor rotor assembly, e.g. the spacer, may include a projection, which may project toward the hub in use. The spacer may comprise a mount portion projecting in a direction away from the projection. The spacer and/or the sensor rotor assembly may be attached or attachable to the hub with at least part or all of an outer circumferential surface of the projection positionally adjusted or adjustable, fitted or fittable or mounted or moutable to, the inner circumferential surface of the through hole. The sensor rotor may have an annular outward appearance, and may be mounted or mountable with an inner circumferential surface thereof positionally adjusted, fitted or mounted to an outer circumferential surface of the mount portion.

The spacer may be formed from a different material to the sensor rotor. The sensor rotor may be formed of iron, and/or the spacer may be formed of an aluminum alloy.

The sensor rotor may comprise an engaging portion formed of an inner circumferential region thereof, which may project toward the hub in use. The sensor rotor may be mounted or mountable to the hub with an outer circumferential surface of the engaging portion positionally adjusted, fitted or mounted to the inner circumferential surface of the through hole.

The sensor rotor assembly may comprise a dust seal, which may be disposed or disposable between an inner circumferential surface of the spacer or the engaging portion and an outer lateral surface of the bearing.

The sensor rotor assembly may be comprised in or configured for use in the vehicle of the first aspect.

Described herein by way of example only is a method of producing, repairing or retrofitting a hub, wheel, wheel member or vehicle, such as a saddle-ride or straddle-type vehicle, e.g. a vehicle according to the first aspect. The method may comprise mounting a sensor rotor or sensor rotor assembly, such as a sensor rotor assembly according to the third aspect, to a hub for a wheel using a method according to the second aspect.

Described herein by way of example only is a wheel, such as a wheel for a straddle-type or saddle-ride vehicle, e.g. a vehicle according to the first aspect. The wheel may comprise a sensor rotor assembly according to the third aspect.

The wheel may include a wheel member having an annular rim, and a hub formed centrally of the rim. The hub may have a through hole or passage formed at a center of rotation e.g. of the wheel and/or wheel member. A bearing may be attached to an inner circumferential surface of the through hole or passage. A tire may be attached or attachable to the rim.

Described herein by way of example only is an assembly comprising a hub for a wheel, such as a wheel according to the fifth aspect, and a sensor rotor assembly according to the third aspect.

It will be appreciated that features analogous to those described above or below in relation to any of the above aspects or below embodiments may be individually and separably or in combination applicable to any of the other aspects or embodiments.

Apparatus features analogous to, or configured to implement, those described above in relation to a method and method features analogous to the use, installation, assembly, repair and manufacture of those described above in relation to an apparatus are also intended to fall within the scope of the present invention.

### BRIEF DESCRIPTION OF DRAWINGS

An embodiment of the present invention will now be described by way of example only, with reference to the accompanying drawings, which are:
**Figure 1** the side view showing an entire construction of a two-wheeled motor vehicle according to an embodiment of the present invention;
**Figure 2** an enlarged side view of a portion around the center of a front wheel;
**Figure 3** a view in vertical section taken in a transverse direction passing through a hub of the front wheel;
**Figure 4** a view in vertical section taken in a transverse direction of a sensor rotor; and
**Figure 5** a view in vertical section taken in a transverse direction of a sensor rotor according to an embodiment of the present invention.

### DETAILED DESCRIPTION OF DRAWINGS

It will be appreciated that the term straddle-type vehicle or motor vehicle used herein, and as used in the art is meant to include the following terms also used in the art:
saddle-ride type vehicle or motor vehicle, saddle-straddling type vehicle or motor vehicle, and includes: motorcycles, and motorbikes as well as motor tricycles and All Terrain Vehicles (ATVs), scooters, mopeds and snowmobiles.

Preferred embodiments of this invention will be described in detail hereinafter with reference to the drawings. The embodiments will be described taking a two-wheeled motor vehicle as an example of saddle riding type vehicle.

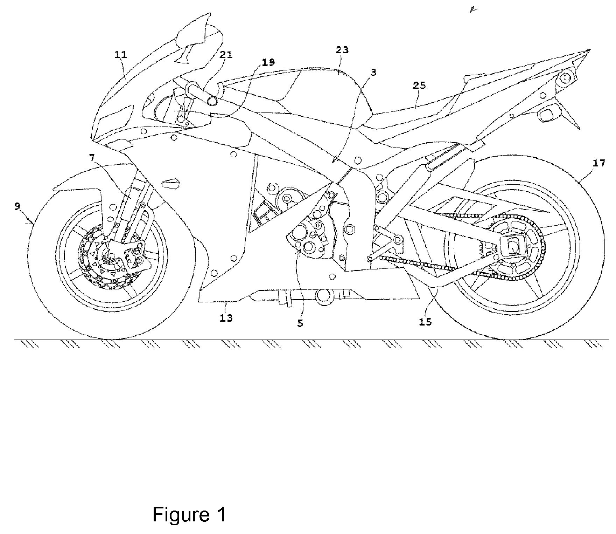

Figure 1 is a side view showing an entire construction of a vehicle, which is by way of example a two-wheeled motor vehicle, according to a first embodiment of the present invention. The terms front, rear, right and left used in the following description refer to the directions as seen from the rider mounted on the vehicle.

The two-wheeled motor vehicle 1 includes a body frame 3, an engine 5, front forks 7, a front wheel 9, an upper cowl 11, an under cowl 13, a swing arm 15 and a rear wheel 17.

The body frame 3 forms a framework of the two-wheeled motor vehicle 1, and carries the engine 5 for generating drive. The body frame 3 also has a head tube 19 disposed forward. The head tube 19 has the front forks 7 swivelably attached thereto, and the front forks 7 have a steering handle 21 at a top end thereof. The front forks 7 have the front wheel 9 attached to bottom ends thereof to be rotatable, e.g. about a horizontal axis. The front wheel 9 is attached to be swivelable with the steering handle 21 and front forks 7.

The upper cowl 11 is attached to the body frame 3 to overlap an area forward of the head tube 19 and an upper forward portion of the engine 5 as seen from a side of the vehicle. The upper cowl 11 straightens air flows coming in from the front, and efficiently guides the air to the engine 5. The under cowl 13 is connected to a lower portion of the upper cowl 11 and is attached to overlap a lower portion of the engine 5 as seen from a side of the vehicle. The under cowl 13 straightens air flows coming in from the front, and efficiently guides the air to the engine 5 in combination with the upper cowl 11. The swing arm 15 is swingably attached at one end thereof to the rear of the body frame 3. The swing arm 15 has the rear wheel 17 attached to the other end thereof to be rotatable about a horizontal axis.

The body frame 3 has a fuel tank 23 mounted in a position thereof above the engine 5. A seat 25 for seating the rider is mounted on the body frame 3 rearward of the fuel tank 23.

The front forks 7 noted above correspond to the "wheel support" in this invention.

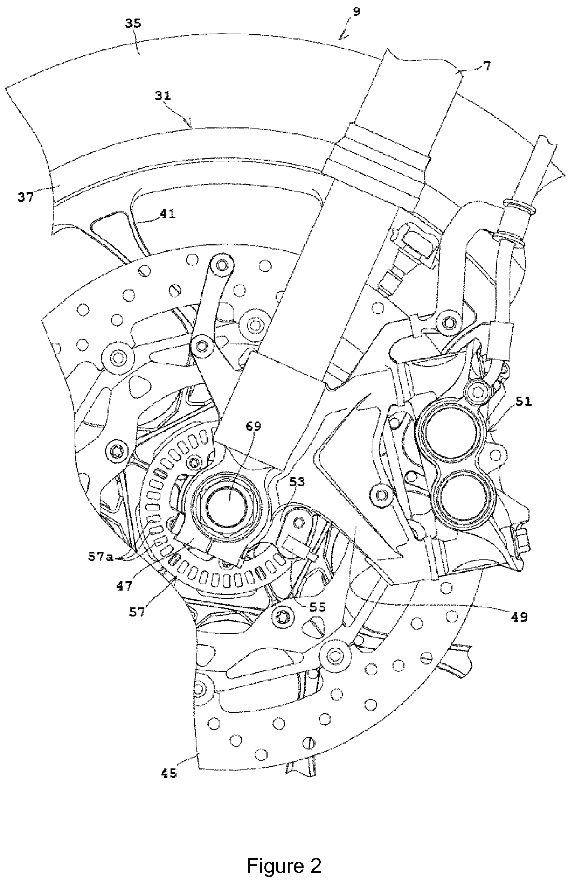

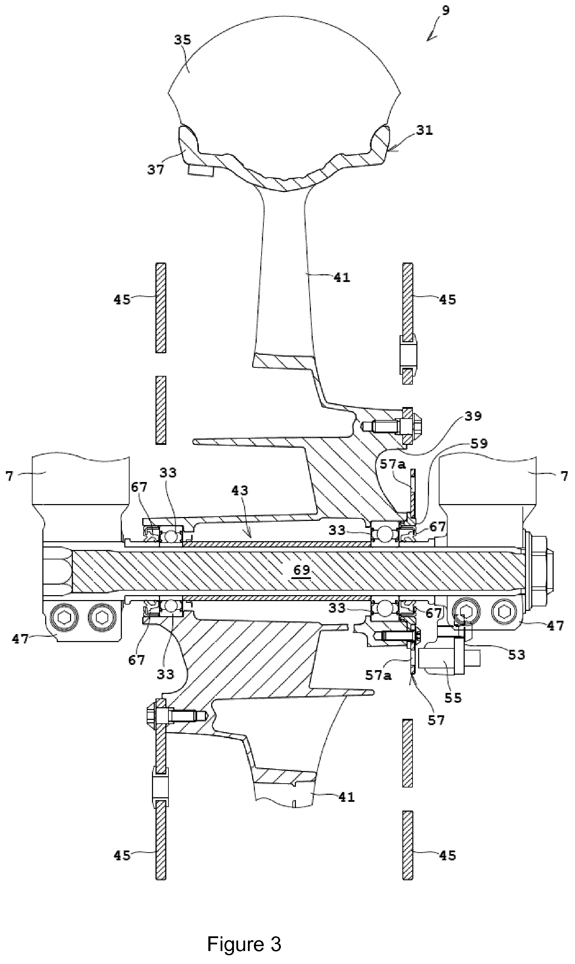

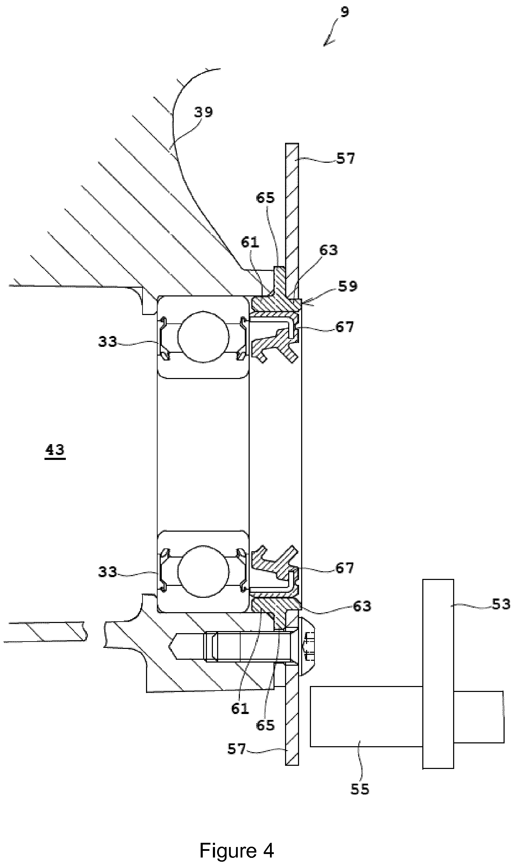

Next, the front wheel and its associated components will be described with reference to Figures 2 to 4. Figure 2 is an enlarged side view of a portion around the center of the front wheel. Figure 3 is a view in vertical section taken in a transverse direction passing through a hub of the front wheel. Figure 4 is a view in vertical section taken in a transverse direction of a sensor rotor.

The front wheel 9 includes a wheel member 31, bearings 33 and a tire 35. The wheel member 31 is formed of a magnesium alloy, for example, and has a rim 37, a hub 39 and a plurality of spokes 41. The rim 37, which is annular in shape, and the hub 39 is formed centrally thereof and has a through hole 43 formed to extend through its center in the transverse direction. The spokes 41 connect inner peripheries of the rim 37 and outer peripheries of the hub 39. Right and left end regions of an inner circumferential surface of the through hole 43 ranging from portions where the bearings 33 are mounted to opening locations have been processed to have a highly accurate coaxiality with respect to the center of rotation, since it is necessary to ensure a high degree of rotation accuracy of the front wheel 9.

The wheel member 31 has disk plates 45 attached to opposite sides in the transverse direction thereof. The disk plates 45 are annular in shape, and are fixed in positions close to its inner circumference to the hub 39 by screws. The front forks 7 have an axle bracket 47 provided at each lower end thereof, and a caliper stay 49 is attached to an upper part of the axle bracket 47. The caliper stay 49 has one end thereof attached to one of the front forks 7, and a brake caliper body 51 is attached to the other end of the caliper stay 49. Brake caliper bodies 51 press against the disk plates 45 from opposite sides to apply braking action. The left one of the front forks 7 has a sensor stay 53 mounted between caliper stay 49 and axle bracket 47. One end of the sensor stay 53 is attached to the front fork 7, and a wheel speed sensor 55 is attached to the other end of the sensor stay 53.

A sensor rotor 57 is mounted in a position closer to the center of the hub 39 than the inner circumference of the disk plate 45. The sensor rotor 57 is formed of iron, for example, and has an outside diameter smaller than an inside diameter of the disk plate 45. The sensor rotor 57 is mounted on the hub 39 using the inner circumferential surface of the through hole 43 as reference. The sensor rotor 57 has a plurality of openings 57a formed therein. The wheel speed sensor 55 magnetically detects portions with the openings 57a and portions without, for example, and outputs a pulsed signal corresponding to a rotating speed of the sensor rotor 57 to an ECU (engine control unit), which is not shown. The ECU derives a rotational frequency of the front wheel 9 from the signal received from the wheel speed sensor 55, for display on a speedometer and/or use in lock determination by an ABS (antilock brake system).

The sensor rotor 57 is mounted on the hub 39 through a spacer 59. The spacer 59 is formed of an aluminum alloy, for example. The spacer 59 has a projection 61, a mount portion 63 and a positioning portion 65. The projection 61 is formed to project from the spacer 59 toward the hub 39 and to have an outside diameter of an outer circumferential surface thereof corresponding to the inside diameter of the inner circumferential surface of the through hole 43 where the bearing 33 is fitted. This projection 61 is fitted in the inner circumferential surface of the through hole 43 to an outer side, e.g. the left, of the bearing 33. The mount portion 63 is formed to project from the spacer 59 away from, e.g. to an opposite side to, the projection 61. The mount portion 63 has the sensor rotor 57 mounted thereon, with an inner circumferential surface of the sensor rotor 57 positionally adjusted to an outer circumferential surface of the mount portion 57. The positioning portion 65 is formed between the projection 61 and the mount portion 63, and extends radially of the wheel member 31. This positioning portion 65 contacts a side surface, such as a left side surface, of the hub 39 directed radially from the through hole 43 for positioning in the transverse direction.

The spacer 59 is mounted in the through hole 43 to have the projection 61 located on an outer side surface, e.g. a left side surface, of the bearing 33. The sensor rotor 57 is mounted on the mount portion 63, with its inner circumferential surface positionally adjusted to the outer circumferential surface of the mount portion 63, and is fixed in a plurality of positions to the hub 39, e.g. by screws. A dust seal 67 is fitted between the inner circumferential surface of the spacer 59 and an outer lateral surface of the bearing 33 for preventing entry of dust.

The front wheel 9 with the sensor rotors 57 attached as described above is placed between the front forks 7, in a state in which opening centers of the through hole 43 and axle brackets 47 are in alignment. Next, the front wheel 9 is rotatably attached to the front forks 7 by inserting an axle 69 in the through hole 43, and fixing the axle 69 to the axle brackets 47 by screws.

According to this embodiment, the through hole 43 formed at the center of rotation of the hub 39 is such that, since it is necessary to ensure a high degree of rotation accuracy of the front wheel 9 with the bearings 33 and axle 69, the ranges or parts of the through hole 43 from the portions where the bearings 33 are mounted to the opening locations of the through hole 43 have been processed to have a highly accurate coaxiality with respect to the center of rotation. Therefore, by mounting the sensor rotor 57 using the inner circumferential surface of this through hole 43 as reference, the sensor rotor 57 can be mounted with a high degree of coaxiality without processing the outer circumferential surface of the hub 39. This can curb processing cost and thereby reduce the cost of the front wheel 9. Since the reference for mounting the sensor rotor 57 can be set close to the center of rotation, the sensor rotor 57 can be reduced in diameter. This can attain a weight saving of the front wheel 9. Since the diameter of the sensor rotor 57 can be small, the sensor stay 53 to which the wheel speed sensor 55 is attached can be reduced in length and improved in strength.

The projection 61 of the spacer 59 is mounted in the through hole 43, and the sensor rotor 57 is mounted on the mount portion 63 of the spacer 59, which can realize the high degree of coaxiality with ease. Where, in the first Embodiment, the wheel member 31 is formed of a magnesium alloy and the sensor rotor 57 iron, the sensor rotor 57 cannot be directly attached to the wheel member 31 because of electric corrosion. However, by interposing the spacer 59 formed of a different material from the sensor rotor 57 and wheel member 31, such an inconvenience is avoided, and at the same time these components can be attached with high coaxiality.

The dust seal 67 provided between bearing 33 and spacer 59 can prevent entry of dust to the bearing 33. Therefore, performance can be maintained over a long period of time.

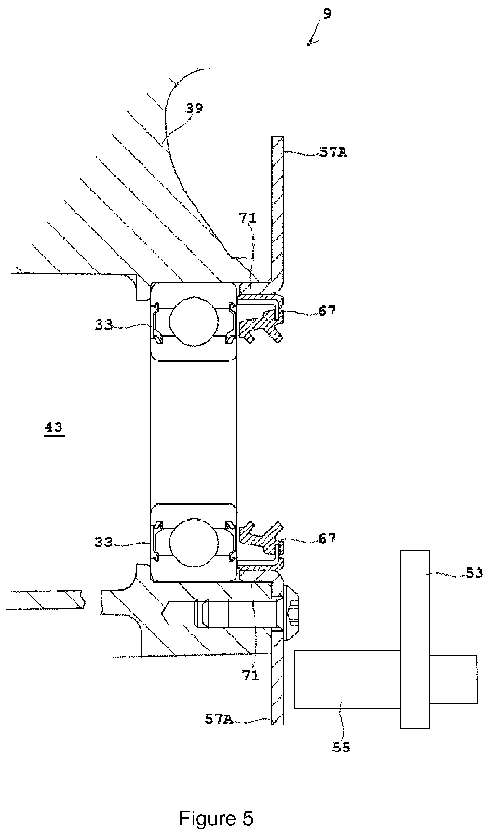

Figure 5 is a view in vertical section taken in a transverse direction of a sensor rotor according to a second embodiment of the present invention.

This embodiment provides only what is different from the construction of sensor rotor 57 in the first embodiment described above. Therefore, like components are affixed with like reference signs and will not particularly be described again.

As distinct from embodiment 1 described above, a sensor rotor 57A in this embodiment does not have the spacer 59. The sensor rotor 57A is directly attached to the wheel member 31. The sensor rotor 57A in this embodiment is formed of iron, and the wheel member 31 is formed of an aluminum alloy, for example. The sensor rotor 57A can therefore be directly attached to the wheel member 31.

The sensor rotor 57A has an engaging portion 71. The engaging portion 71 is formed of an inner circumferential region of the sensor rotor 57A projecting toward the hub 39. The engaging portion 71 has an outer circumferential surface with an outside diameter corresponding to the inside diameter of the inner circumferential surface of the through hole 43 where the bearing 33 is fitted. The sensor rotor 57A is mounted with the outer circumferential surface of the engaging portion 71 located on the inner circumferential surface of the through hole 43, and is fixed in a plurality of positions to the hub 39, e.g. by screws. A dust seal 67 is fitted between the inner circumferential surface of the engaging portion 71 and the outer lateral surface of the bearing 33 for preventing entry of dust.

According to this embodiment, the sensor rotor 57A does not need an interposing component such as the spacer 59. The sensor rotor 57A can be mounted easily with a high degree of coaxiality.

This invention is not limited to the foregoing embodiments, but may be modified as follows:
The first embodiment has been described taking for example the case where the wheel member 31 is formed of a magnesium alloy, the sensor rotor 57 iron, and the spacer 59 an aluminum alloy. In the second embodiment, the wheel member 31 is formed of an aluminum alloy, and the sensor rotor 57A iron. However, this invention is not limited to these materials for forming the respective components.

In each of foregoing first and second embodiments, the spacer 59 is included, or the inner circumferential shape of the sensor rotor 57A is processed, in order to mount the sensor rotor 57 or 57A on the hub 39 using the inner circumferential surface of the through hole 43 as reference. However, this invention is not limited to these constructions. For example, the inside diameter of the sensor rotor and the inside diameter in the end region of the through hole 43 may be made the same, and the sensor rotor may be mounted and positionally adjusted in a state where a rod-like jig having an outside diameter corresponding to the inside diameter of the through hole 43 is inserted in the through hole 43. Then, the sensor rotor may be fixed to the hub 39, e.g. with screws, followed by removal of the jig.

The first and second embodiments have been described taking for example the case of the front wheel 9 provided with the sensor rotor 57 or 57A. This invention is applicable also to the rear wheel 17.

In the first and second embodiments, the sensor rotor 57 or 57A is provided on the left side of the front wheel 9. Instead, the sensor rotor 57 or 57A may be provided on the right side of the front wheel 9.

In the first and second embodiments, the wheel member 31 has disk plates 45 disposed at the opposite sides in the transverse direction thereof. This invention is not limited to such an arrangement. For example, this invention is applicable also where a disk plate 45 is provided at only one side in the transverse direction.

The first and second embodiments have been described taking the two-wheeled motor vehicle 1 as an example of saddle riding type vehicle. However, this invention is applicable also to other saddle riding type vehicles. The other saddle riding type vehicles include, for example, a scooter, a two-wheeled motor vehicle other than the scooter type, such as a moped, a three-wheeled motor vehicle, a four-wheeled motor vehicle, and an ATV (All Terrain Vehicle) four-wheeled buggy.

This invention may be embodied in other specific forms and, accordingly, reference should be made to the appended claims, rather than to the foregoing specification, as indicating the scope of the invention.

## Claims

1. A vehicle (1), such as a saddle riding or straddle-type vehicle driven by a straddling rider, comprising:
a wheel (9) including a wheel member (31) having an annular rim (37), and a hub (39) formed centrally of the rim (37) to have a through hole or passage (43) formed at or along a center of rotation, a bearing (33) attached to an inner circumferential surface of the through hole or passage (43), and a tire (35) attached or attachable to the rim (37);
a wheel support (7) for rotatably supporting the wheel (9) with an axle (69) inserted in the through hole or passage (43);
a sensor rotor (57, 57A) mounted on the hub (39) using the inner circumferential surface of the through hole or passage (43) as reference;
a wheel speed sensor (55) for detecting rotation of the sensor rotor (57);
**characterized by**
a spacer (59) including a projection (61) projecting toward the hub (39) and a mount portion (63) projecting in a direction away from the projection (61), the spacer (59) being attached with an outer circumferential surface of the projection (61) positionally adjusted to the inner circumferential surface of the through hole or passage (43);
and in that the sensor rotor (57) has an annular outward appearance, and is mounted with an inner circumferential surface thereof positionally adjusted to an outer circumferential surface of the mount portion (63).

2. The vehicle (1) according to claim 1, wherein the through hole (43) has a dust seal (67) disposed between an inner circumferential surface of the spacer (59) and an outer lateral surface of the bearing (33).

3. The vehicle (1) according to claim 1 or claim 2, wherein the spacer (59) is formed from a different material to the wheel member (31) and sensor rotor (57); and optionally the wheel member (31) is formed of a magnesium alloy, the sensor rotor (57) is formed of iron, and the spacer (59) is formed of an aluminum alloy.

4. The vehicle (1) according to any preceding claim, wherein the sensor rotor (57) is mounted on the hub (39) so as to be concentric or co-axial with the inner circumferential surface of the through hole or passage (43).

5. The vehicle (1) according to any preceding claim, wherein the sensor rotor (57, 57A) has a plurality of openings (57A) formed therein.

6. The vehicle (1) according to claim 5, wherein the wheel speed sensor (55) is arranged to detect presence/absence of the openings (57A) magnetically.

## Patentansprüche

1. Fahrzeug (1), wie beispielsweise ein Sattelfahrzeug oder ein Grätschsitz-Fahrzeug, das von einem spreizbeinig sitzenden Fahrer gelenkt wird, das aufweist:
ein Rad (9), einschließlich eines Radelementes (31) mit einer ringförmigen Felge (37) und einer Nabe (39), die mittig von der Felge (37) ausgebildet ist, damit ein Durchgangsloch oder einen Durchgang (43) vorhanden ist, das im oder längs eines Rotationszentrums gebildet wird, eines Lagers (33), das an einer inneren Umfangfläche des Durchgangsloches oder Durchganges (43) befestigt ist, und eines Reifens (35), der auf der Felge (37) befestigt ist oder befestigt werden kann;
einen Radträger (7) für das drehbare Tragen des Rades (9) mit einer Achse (69), die in das Durchgangsloch oder den Durchgang (43) eingesetzt wird;
einen Sensorrotor (57, 57A), der an der Nabe (39) montiert ist, wobei die innere Umfangfläche des Durchgangsloches oder Durchganges (43) als Bezug benutzt wird;
einen Raddrehzahlsensor (55) für das Nachweisen der Rotation des Sensorrotors (57);
**gekennzeichnet durch**
einen Abstandshalter (59) einschließlich eines Vorsprunges (61), der in Richtung der Nabe (39) vorsteht, und eines Montageabschnittes (63), der in einer Richtung weg vom Vorsprung (61) vorsteht, wobei der Abstandshalter (59) mit einer äußeren Umfangsfläche des Vorsprunges (61) verbunden ist, der positionell zur inneren Umfangfläche des Durchgangsloches oder Durchganges (43) reguliert wird;
und **dadurch**, dass
der Sensorrotor (57) ein ringförmiges äußeres Aussehen zeigt und mit einer inneren Umfangfläche davon montiert ist, die positionell zu einer äußeren Umfangsfläche des Montageabschnittes (63) reguliert wird.

2. Fahrzeug (1) nach Anspruch 1, bei dem das Durchgangsloch (43) eine Staubdichtung (67) aufweist, die zwischen einer inneren Umfangsfläche des Abstandshalters (59) und einer äußeren seitlichen Fläche des Lagers (33) angeordnet ist.

3. Fahrzeug (1) nach Anspruch 1 oder 2, bei dem der Abstandshalter (59) aus einem zum Radelement (31) und Sensorrotor (57) abweichenden Material hergestellt wird; und das Radelement (31) wahlweise aus einer Magnesiumlegierung, der Sensorrotor (57) aus Eisen und der Abstandshalter (59) aus einer Aluminiumlegierung hergestellt wird.

4. Fahrzeug (1) nach einem der vorhergehenden Ansprüche, bei dem der Sensorrotor (57) an der Nabe (39) montiert wird, um so konzentrisch oder koaxial zur inneren Umfangfläche des Durchgangsloches oder Durchganges (43) zu sein.

5. Fahrzeug (1) nach einem der vorhergehenden Ansprüche, bei dem der Sensorrotor (57, 57A) eine Vielzahl von darin ausgebildeten Öffnungen (57A) aufweist.

6. Fahrzeug (1) nach Anspruch 5, bei dem der Raddrehzahlsensor (55) angeordnet ist, um das Vorhandensein/Nichtvorhandensein der Öffnungen (57A) magnetisch nachzuweisen.

## Revendications

1. Véhicule (1), par exemple un véhicule du type à selle ou du type à enfourcher, conduit par un motocycliste enfourchant le véhicule, comprenant :
une roue (9), englobant un élément de roue (31) comportant une jante annulaire (37) et un moyeu (39) agencé de manière centrale par rapport à la jante (37), de sorte à comporter un trou de passage ou un passage (43) formé au niveau d'un centre de rotation ou le long de celui-ci, un palier (33) fixé sur une surface circonférentielle interne du trou de passage ou du passage (43) et un bandage pneumatique (35) fixé ou pouvant être attaché sur la jante (37) ;
un support de roue (7) pour supporter de manière rotative la roue (9), avec un essieu (69) inséré dans le trou de passage ou le passage (43) ;
un rotor de capteur (57, 57A) monté sur le moyeu (39), utilisant la surface circonférentielle interne du trou de passage ou du passage (43) comme référence ;
un capteur de la vitesse de la roue (55), pour détecter la rotation du rotor de capteur (57) ;
**caractérisé par** :
une entretoise (59), englobant une saillie (61) débordant vers le moyeu (39), et une partie de montage (63) débordant dans une direction allant à l'écart de la saillie (61), l'entretoise (59) étant fixée avec une surface circonférentielle externe de la saillie (61) étant ajustée quant à sa position sur la surface circonférentielle interne du trou de passage ou du passage (43) ;
et en ce que
le rotor de capteur (57) a un aspect externe annulaire et est monté avec sa surface circonférentielle interne ajustée quant à sa position sur une surface circonférentielle externe de la partie de montage (63).

2. Véhicule (1) selon la revendication 1, dans lequel le trou de passage (43) comporte un joint étanche aux poussières (67) agencé entre une surface circonférentielle interne de l'entretoise (59) et une surface latérale externe du palier (33).

3. Véhicule (1) selon les revendications 1 ou 2, dans lequel l'entretoise (59) est formée à partir d'un matériau différent de celui de l'élément de roue (31) et du rotor de capteur (57) ; et dans lequel l'élément de roue (31) est formé optionnellement à partir d'un alliage de magnésium, le rotor de capteur (57) étant formé à partir de fer et l'entretoise (59) étant formée à partir d'un alliage d'aluminium.

4. Véhicule (1) selon l'une quelconque des revendications précédentes, dans lequel le rotor de capteur (57) est monté sur le moyeu (39) de sorte à être concentrique ou coaxial à la surface circonférentielle interne du trou de passage ou du passage (43).

5. Véhicule (1) selon l'une quelconque des revendications précédentes, dans lequel le rotor de capteur (57, 57A) comporte plusieurs ouvertures (57A) qui y sont formées.

6. Véhicule (1) selon la revendication 5, dans lequel le capteur de la vitesse de la roue (55) est agencé de sorte à détecter de manière magnétique la présence/l'absence des ouvertures (57A).
